# FASCICULE DE BREVET EUROPEEN

(11) **EP 3 891 661 B1**
(45) Date de publication et mention de la délivrance du brevet: **25.01.2023**
(21) Numéro de dépôt: 19880940.2
(22) Date de dépôt: 06.12.2019
(51) Int. Cl.: G06K 19/07, G06K 19/077

(54) **CARTE À PUCE EN MÉTAL À DOUBLE INTERFACE DE COMMUNICATION**
METALLCHIPKARTE MIT DOPPELTER KOMMUNIKATIONSSCHNITTSTELLE
METAL CHIP CARD WITH DUAL COMMUNICATION INTERFACE

(30) Priorité: 07.12.2018 FR 1872550
(43) Date de publication de la demande: 13.10.2021
(73) Titulaire: Smart Packaging Solutions, 13790 Rousset (FR)
(72) Inventeur: VACCARELLO, Lea, 13790 Rousset (FR); GERIN, Guillaume, 13790 Rousset (FR); DANLER-BAUMGARTNER, Stephan, 13790 Rousset (FR)
(74) Mandataire: Nicolle, Olivier
(86) Numéro de dépôt international: PCT/FR2019/000203
(87) Numéro de publication internationale: WO 2020/115375

(56) Documents cités:
- EP-A1- 2 073 154
- EP-A2- 0 646 895
- US-A1- 2014 273 830
- US-A1- 2017 017 871

## Description

La présente invention concerne une carte à puce à double interface de communication à contact et sans contact, pourvue d'un corps de carte essentiellement en métal.

### ETAT DE LA TECHNIQUE

Dans le domaine des cartes à puce, en particulier celles utilisées pour des applications bancaires, une partie de la demande tend à se concentrer, pour des questions de meilleure prise en main et de différentiation, sur des cartes plus lourdes que les traditionnelles cartes à puce à corps en matière plastique.

Certaines des cartes à puce connues présentent une couche métallique sur une seule face de la carte, l'autre face n'étant pas recouverte de métal mais pourvue d'une antenne permettant une communication avec un lecteur distant par voie radiofréquence. Néanmoins, du fait de l'effet de blindage de la couche métallique, la communication radiofréquence se trouve dégradée, en particulier lorsque la face métallique de la carte est présentée vers le lecteur. En particulier, des essais ont montré qu'avec ce type de carte à puce, il était impossible d'être conforme à certaines normes telles que celles imposées par les spécifications dites EMVCo qui imposent des exigences mécaniques, électriques et de qualité de communication radiofréquence.

Afin de remédier à ce problème et maintenir une bonne qualité de communication radiofréquence quelle que soit l'orientation de la carte à puce par rapport au lecteur distant, il a été proposé dans le document FR3032294 A1 de construire la carte à puce à l'aide d'un insert métallique placé entre deux feuilles externes pourvues chacune d'une antenne et d'une couche de ferrite. Cette disposition permet de maintenir une bonne qualité de communication telle que requise par les spécifications de type EMVCo, mais le procédé de réalisation de ce type de carte est relativement complexe et coûteux. En outre, dans ce mode de réalisation, l'insert métallique est situé entre des couches externes de la carte en matière plastique et n'est donc pas directement visible de l'extérieur, ce qui ne contribue pas à créer une différentiation de perception suffisante vis-à-vis des cartes entièrement en matière plastique.

Le document EP 2 073 154 A1 décrit une carte à puce dont le corps de carte n'est pas en métal, et dont le module électronique à l'intérieur du corps de carte est pourvu d'une batterie pour pouvoir alimenter un capteur biométrique, tel qu'un capteur d'empreintes digitales, intégré à la carte à puce. L'objectif recherché est de pouvoir réaliser des tests biométriques d'identité directement sur la carte à puce, sans dépendre d'une communication radiofréquence avec un lecteur distant, afin de gagner du temps sur les transactions. La présence de cette batterie n'a aucun rapport avec et aucun effet sur le mode de communication avec le lecteur sans contact distant.

Le document US 2017/017871 A1 décrit une carte à puce à double interface de communication à contact et sans contact, comprenant un corps de carte comportant deux ou trois feuilles métalliques et un module électronique pourvu d'un bornier de contacts et d'une antenne destinée à une communication radiofréquence avec l'antenne d'un lecteur distant. Toutefois, cette carte à puce ne comporte pas de circuit de communication actif alimenté par une batterie et apte à compenser l'effet de blindage électromagnétique des feuilles métalliques de manière à établir une communication radiofréquence active entre la carte à puce et le lecteur distant.

### BUT DE L'INVENTION

L'invention a pour but de proposer une nouvelle structure de carte à puce à corps métallique et à double interface de communication à contact et sans contact qui possède une interface de communication sans contact modifiée de manière qu'elle soit apte à communiquer en mode sans contact selon les exigences des spécifications de type EMVCo et ce quelle que soit la face de la carte présentée au champ du lecteur, tout en conservant une structure simple aisée à fabriquer.

Un autre but de l'invention est de proposer une carte à puce possédant un corps de carte essentiellement métallique susceptible d'offrir une différentiation importante en termes de perception, vis-à-vis des cartes en matière plastiques connues. Cette différentiation passe notamment par le besoin d'obtenir une carte relativement lourde, présentant du métal en surface et sur la tranche, et faisant un bruit « métallique » lorsqu'elle est jetée sur la surface d'une table ou autre.

### OBJET DE L'INVENTION

Dans son principe, l'invention consiste à doter la carte à puce d'un corps essentiellement métallique, à l'exception d'un emplacement réservé au module microélectronique, et à doter le module d'une antenne et d'un circuit de communication actif alimenté par une batterie placée dans une cavité aménagée dans le corps de carte.

A cet effet, le corps de carte est réalisé en deux plaques de métal aux dimensions ISO 7816-1, pourvues de découpes traversantes destinées à recevoir le module microélectronique, et de découpes borgnes formant une cavité destinée à recevoir une batterie.

L'invention a donc pour objet une carte à puce à double interface de communication à contact et sans contact, comprenant un corps de carte comportant deux feuilles métalliques et un module électronique pourvu d'un bornier de contacts et d'une antenne destinée à une communication radiofréquence avec l'antenne d'un lecteur distant, caractérisée en ce que le module électronique comporte un circuit de communication actif alimenté par une batterie située dans la carte à puce et configuré pour générer un signal de porteuse susceptible d'interagir avec le signal de porteuse émis par un lecteur sans contact distant de manière à établir une communication radiofréquence active entre la carte à puce et ledit lecteur distant.

De cette manière, l'effet de blindage des couches métalliques est compensé et la communication entre le lecteur et la carte à puce n'est plus tributaire de la faible amplitude de la porteuse du lecteur qui serait autrement diminuée par la carte à puce à cause de la présence des feuilles métalliques.

Selon un mode de réalisation de l'invention, le circuit de communication actif, lorsqu'il est placé au voisinage du lecteur, émet une porteuse de même fréquence que celle du lecteur, déphasée ou non par rapport à la porteuse du lecteur et entraînant une modification de la tension aux bornes de l'antenne du lecteur de façon à communiquer des informations entre le lecteur et la carte à puce.

Dans le mode de réalisation décrit plus haut, le circuit de communication actif dispose de plusieurs manières de communiquer avec le lecteur. Une manière est d'émettre du champ électromagnétique à la même fréquence porteuse que le lecteur et en phase avec la porteuse du lecteur pour coder un état de modulation haut (correspondant à un « 1 » binaire), et d'émettre du champ électromagnétique à la même fréquence porteuse que le lecteur et en opposition de phase avec la porteuse du lecteur pour coder un état de modulation bas (correspondant à un « 0 » binaire).

Selon l'invention, le corps de carte comporte deux feuilles métalliques entre lesquelles est disposée ladite batterie alimentant ledit circuit de communication actif.

Selon un mode de réalisation, au moins l'une des feuilles métalliques est pourvue d'une cavité apte à recevoir ladite batterie.

Selon un autre mode de réalisation, les feuilles métalliques sont chacune pourvue d'une cavité borgne, les deux cavités borgnes étant situées en regard l'une de l'autre et aptes à recevoir ladite batterie.

En outre, les deux feuilles métalliques comportent deux cavités traversantes situées en regard l'une de l'autre et aptes à recevoir le module microélectronique.

Selon un mode de réalisation avantageux, la surface des deux feuilles métalliques est supérieure ou égale à 90 % de la surface externe totale de la carte à puce.

Selon un mode de réalisation, les bornes de la batterie sont reliées à des plots d'alimentation situés sur le module électronique, par l'intermédiaire de pistes conductrices aménagées sur la face interne de l'une des deux feuilles métalliques.

Selon un mode de réalisation, les feuilles métalliques ont une épaisseur d'environ 400 micromètres.

Selon un mode de réalisation, les deux feuilles métalliques sont en acier inoxydable ou en alliage métallique.

Afin d'éviter les courts-circuits, la carte à puce comporte une couche de résine électriquement isolante ou une couche de vernis isolant disposée entre les deux feuilles métalliques.

Selon un mode de réalisation avantageux, le circuit est pourvu de diodes permettant de recharger la batterie via les contacts du module lorsque la carte à puce est insérée dans un lecteur de cartes à puce à contact.

L'invention a également pour objet un procédé de fabrication d'une carte à puce telle que décrite, caractérisé en ce qu'il comporte des étapes consistant à :
- Découper deux feuilles métalliques au format carte à puce ISO 7816-1 ;
- Usiner des lumières traversantes à l'endroit d'implantation prévu pour le module électronique ;
- Usiner des cavités borgnes à l'endroit de chaque feuille métallique prévu pour recevoir une batterie électrique ;
- Interposer un isolant électrique entre les deux feuilles métalliques, par exemple par dépôt sur l'une des faces internes des feuilles métalliques ;
- Reporter la batterie dans la cavité borgne de l'une des feuilles métalliques ;
- Rapporter des pistes conductrices et les connecter entre les bornes de la batterie et les plots d'alimentation du module à l'aide par exemple d'un film conducteur anisotropique ;
- Rapporter et coller la feuille métallique supérieure sur la feuille métallique inférieure ;
- Rapporter et coller le module électronique dans la cavité de la feuille métallique supérieure.

### DESCRIPTION DETAILLEE

L'invention sera décrite plus en détail à l'aide des figures, dans lesquelles :
- La figure 1 représente une vue en perspective éclatée d'une carte à puce selon l'invention ;
- La figure 2 représente une vue de dessus, côté bornier du module, d'une carte à puce selon l'invention ;
- La figure 3 représente une vue de dessus de la feuille supérieure face externe du corps de la carte à puce selon l'invention ;
- La figure 4 représente une vue de dessous de la feuille supérieure face interne ;
- La figure 5 représente une vue de dessus de la feuille inférieure face externe du corps de la carte à puce selon l'invention ;
- La figure 6 représente une vue de dessous de la feuille inférieure face interne ;
- La figure 7 représente une vue en coupe longitudinale de la carte à puce selon l'invention selon le plan de coupe A-A' de la figure 2 ;
- La figure 8 représente une vue en coupe longitudinale de la carte à puce selon l'invention selon le plan de coupe B-B' de la figure 2 ;
- La figure 9 représente une vue en coupe transversale agrandie du module de la carte à puce ;
- La figure 10 représente un schéma fonctionnel des circuits d'une carte à puce passive selon l'état de la technique ;
- La figure 11 représente un schéma fonctionnel des circuits de la carte à puce selon l'invention ;
- La figure 12 représente une vue du module de la carte à puce, du côté de l'antenne ;
- La figure 13 représente une vue du module de la carte à puce, du côté des contacts du bornier ;
- La figure 14 représente une vue en transparence du module contenant tous les composants électroniques du circuit actif ;
- La figure 15 représente une vue schématique des étapes du procédé d'assemblage des éléments de la carte à puce.

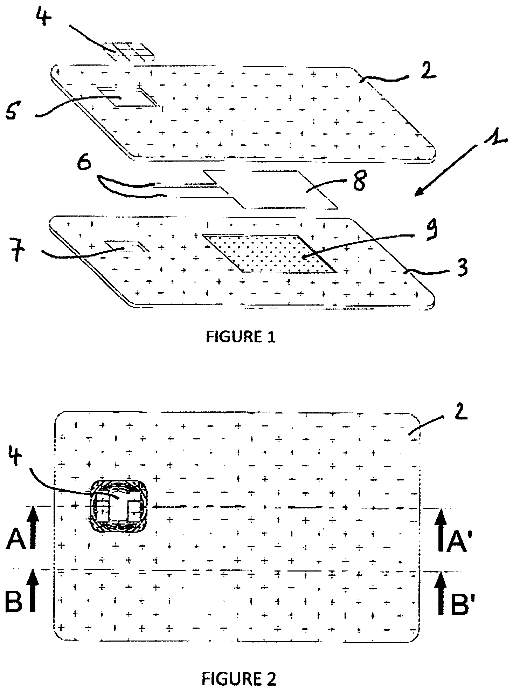

Dans la figure 1, on a représenté en perspective éclatée une carte à puce 1 selon l'invention. Elle comporte deux feuilles métalliques 2,3, notamment au format correspondant à la norme ISO 7816-1. Par convention, on désignera comme feuille supérieure la feuille 2 qui comporte une cavité 5 traversante recevant le module électronique 4, la cavité 5 ayant la taille du bornier du module. Pour être conforme aux standards en vigueur dans le domaine des cartes à puce, les deux feuilles métalliques 2,3 ont chacune une épaisseur d'environ 400 micromètres.

Comme visible sur la figure 2 correspondant à une vue de dessus de la carte à puce, le module électronique 4 comporte sur sa surface visible un bornier de contacts normalisés, destinés à la connexion avec des contacts correspondants d'un lecteur de carte à puce, comme cela est bien connu dans le domaine des cartes à puce.

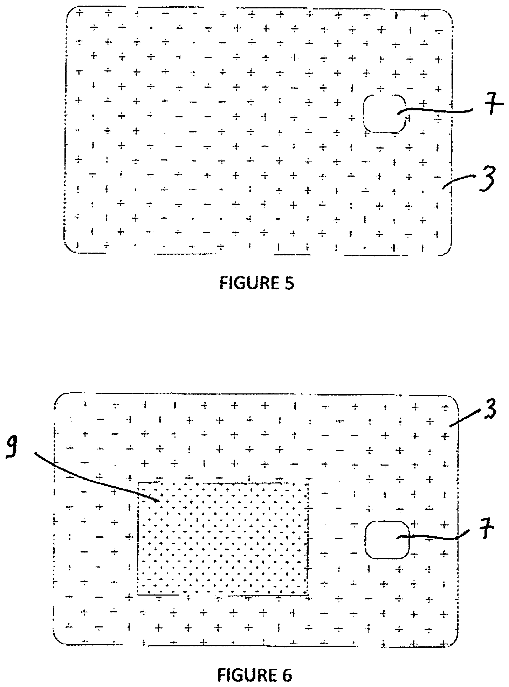

Comme visible sur la figure 5, la feuille inférieure 3 est pourvue d'une cavité 7 plus petite, traversante, qui reçoit la partie inférieure du module 4 qui est pourvue d'une antenne 12 destinée à communiquer avec l'antenne d'un lecteur distant.

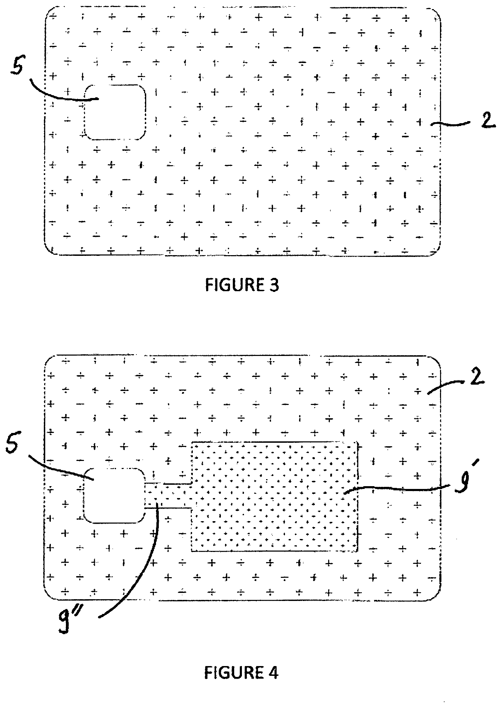

Les figures 3 et 4 montrent respectivement la face externe et interne de la feuille métallique supérieure 2. Comme on le voit, l'essentiel de la surface de la feuille 2, soit environ 90 %, est en métal plein. La face externe de la feuille 2 comporte simplement une ouverture traversante 5 destinée à recevoir la face supérieure du module électronique 4 (non représenté dans la figure 3). La face interne de la feuille métallique 2 (figure 4) comporte une cavité 9' borgne homologue de la cavité 9 de la feuille inférieure 3, destinée à recevoir une partie de l'épaisseur de la batterie 8 (non représentée en figure 4). La cavité 9' est prolongée par une portion de cavité borgne 9" destinée à laisser passer les pistes conductrices 6 permettant de connecter les bornes de la batterie 8 aux plots d'alimentation du module électronique 4. La cavité 9" débouche dans la cavité 5 destinée à recevoir le module 4.

Les figures 5 et 6 montrent respectivement la face externe et interne de la feuille métallique inférieure 3. Là encore, l'essentiel de la surface de la feuille 3, soit environ 90 %, est en métal plein. La face externe de la feuille 3 comporte simplement une ouverture traversante 7 destinée à recevoir la face inférieure du module électronique 4 (non représenté dans la figure 5). La partie de la cavité 7 non remplie par la partie inférieure du module 4 peut être remplie par un matériau électriquement isolant par exemple une résine. La face interne de la feuille métallique 3 comporte une cavité borgne 9, destinée à recevoir une partie de l'épaisseur de la batterie 8 (non représentée en figure 6). Les cavités 9 et 7 n'ont pas besoin d'être reliées, dans la mesure où les pistes de connexion 6 de la batterie 8 au module 4 sont disposées, dans l'exemple représenté, sur la face interne de la feuille métallique supérieure 2.

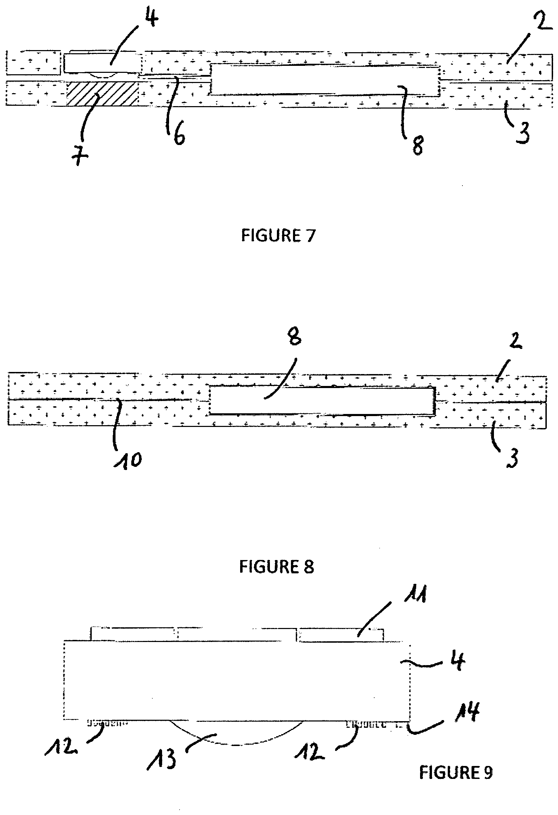

En figure 7 on a représenté la carte à puce de la figure 2 en vue en coupe longitudinale selon le plan de coupe A-A' passant par le module 4. L'épaisseur de la carte est exagérée pour une meilleure visibilité. Comme on le voit, la batterie 8 est connectée par les pistes métalliques 6 aux bornes d'alimentation du module 4.

La figure 8 montre une coupe similaire de la carte à puce, mais selon le plan de coupe B-B' de la figure 2, ne passant pas par le module 4.

Une très fine couche de résine ou de colle isolante (non représentée) est interposée entre les faces internes des feuilles métalliques 2,3, afin d'éviter la mise en court-circuit des bornes + et - de la batterie.

La figure 9 représente une vue en élévation agrandie et en coupe du module électronique 4, montrant en particulier les contacts normalisés 11 du bornier situé en face supérieure du module, les spires de l'antenne 12 située en face inférieure du module, une goutte 13 de résine d'enrobage protégeant les composants électroniques du module, comme connu en soi. On a également représenté une borne de contact 14 destinée à être connectée à l'une des pistes 6 de liaison vers la batterie 8.

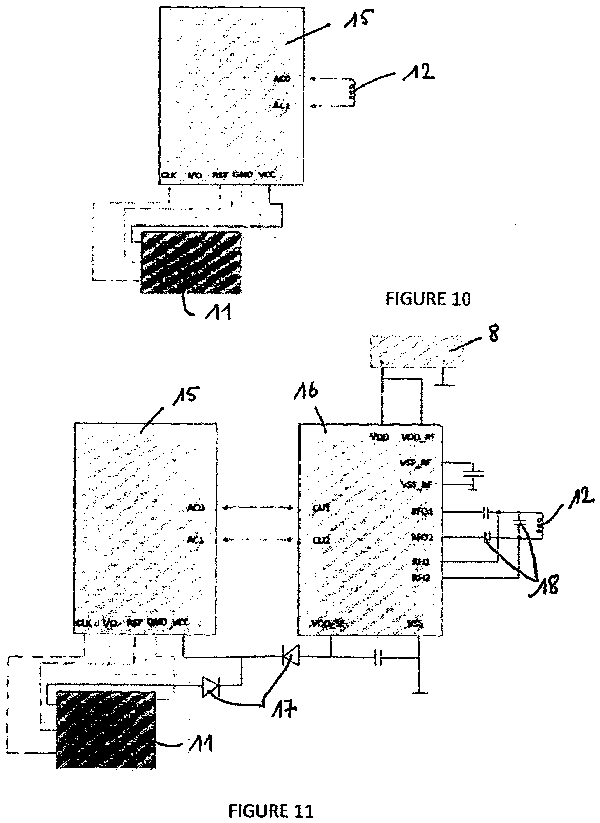

La figure 10 rappelle le schéma électronique des composants d'une carte à puce passive conforme à l'état de la technique. Le module comporte un bornier de contacts 11 relié à un composant 15 de carte à puce à microprocesseur. Le composant passif 15 est connecté à une antenne 12 qui permet de capter, typiquement via une antenne d'amplification dite « booster » (non représentée), le flux électromagnétique issu du lecteur distant, ce qui permet de fournir au composant 15 l'énergie électrique nécessaire pour fonctionner et pour assurer la communication avec le lecteur. A cet effet, l'antenne booster doit être de grande taille, typiquement la taille du corps de carte, et dans ces conditions il n'est pas possible que le corps de carte possède des feuilles en métal recouvrant la ou les antennes, car ces feuilles constitueraient un blindage qui rendrait impossible une communication radiofréquence efficace entre la carte sans contact et le lecteur.

Pour remédier à cela, l'invention propose un nouveau module correspondant au schéma électronique de la figure 11. Dans ce schéma, un composant 15 de carte à puce à microprocesseur, connu en soi, est connecté à un étage de communication radiofréquence composé d'un composant actif 16 qui a pour but de transformer le signal d'une carte à puce 15 en un signal radiofréquence actif permettant une communication ascendante et descendante avec un lecteur radiofréquence distant.

A la différence des cartes à puce connues comprenant un insert métallique placé entre deux feuilles externes en matière plastique, la carte à puce selon l'invention comporte une batterie 8 destinée à alimenter le circuit de communication radiofréquence 16 du module 4.

Plus précisément, la batterie 8 sert à alimenter en énergie électrique un circuit de communication 16, apte à alimenter une puce traditionnelle 15 et à transformer le signal passif de cette puce traditionnelle 15 via son interface sans contact, pour réaliser une communication active avec un lecteur sans contact distant. Cela permet de ne pas être tributaire de la faible amplitude de la porteuse du lecteur qui serait atténuée par la carte à puce traditionnelle à cause de la présence des feuilles métalliques.

Selon un mode de réalisation de l'invention, la carte à puce métallique émet une porteuse de même fréquence que celle du lecteur. La porteuse émise par le circuit de communication 16 via l'antenne de communication 12 de la carte à puce est en phase ou en opposition de phase avec le signal de porteuse émis par le lecteur, afin de coder un état de modulation haut ou un état de modulation bas.

La porteuse émise en mode actif par la nouvelle carte à puce au voisinage du lecteur (en pratique la distance entre lecteur et carte à puce est inférieure à 10 centimètres) va venir modifier la tension aux bornes de l'antenne du lecteur, et cette modification permet de communiquer des données entre le lecteur et la carte à puce métallique.

De ce fait, le mode de communication entre la carte à puce et le lecteur est dit actif, par opposition au mode de communication classique qui est passif au sens où seul le lecteur émet un signal de porteuse qui est capté par la carte à puce sans contact. La disposition classique fonctionne lorsque la carte à puce possède un corps de carte en matière plastique, mais n'est plus adaptée à une carte à puce dont le corps de carte est essentiellement métallique et génère un effet de blindage électromagnétique.

La batterie 8 est connectée au circuit de communication radiofréquence 16 du module 4 par des pistes conductrices 6. La batterie 8 est de faible épaisseur, mais son intégration nécessite néanmoins l'aménagement de cavités dans les feuilles métalliques, pour l'insertion de la batterie 8. Il peut s'agir d'une cavité unique aménagée dans l'une des deux feuilles métalliques, ou de deux cavités 9, 9' de préférence borgnes, réparties dans la face interne de chacune des feuilles métalliques 2,3.

Le composant 16 est alimenté par la batterie 8, à la différence des circuits passifs des cartes à puce sans contact connues, qui sont alimentées à distance par l'énergie du lecteur. Le composant actif 16 est connecté en sortie à l'antenne 12 du module pourvue d'un circuit d'adaptation composé de capacités. L'antenne 12 est une antenne de petite taille qui est suffisante pour obtenir une qualité de communication radiofréquence de bonne qualité, compte tenu de l'alimentation directe par batterie. Les autres composants électroniques 18 connectés au composant 16 sont principalement des capacités dites de découplage, nécessaires pour la stabilisation de l'alimentation électrique du composant.

Avantageusement, le module électronique est en outre pourvu de diodes 17 permettant de recharger la batterie 8 via les contacts 11 lorsque la carte à puce est insérée dans un lecteur de cartes à puce à contact.

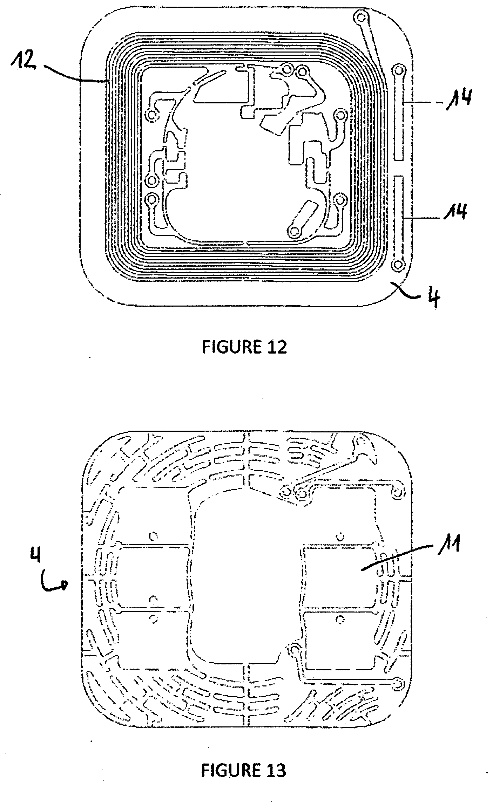

La figure 12 représente un mode de réalisation pratique de la face inférieure du module 4, pourvue de l'antenne 12, et des bornes d'alimentation 14 destinées à être connectées aux pistes 6 allant vers la batterie.

La figure 13 représente un mode de réalisation pratique de la face supérieure du module 4, avec en particulier les contacts 11 du bornier selon la norme ISO 7816.

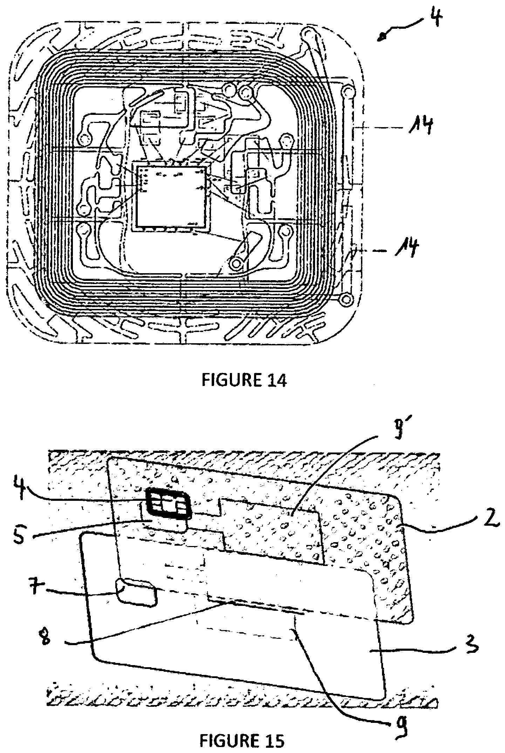

La figure 14 montre le module 4 en vue de dessous (côté antenne), avec une visualisation en transparence (trait plus clair) des contacts de la face supérieure du module.

La figure 15 illustre de façon schématique les étapes du procédé d'assemblage des éléments de la carte à puce. On procède de la manière suivante :
- Découper deux feuilles métalliques au format carte à puce ISO 7816-1 ;
- Usiner des lumières traversantes (5,7) à l'endroit d'implantation prévu pour le module électronique 4 ;
- Usiner des cavités borgnes (9, 9') à l'endroit de chaque feuille métallique (2,3) prévu pour recevoir une batterie électrique 8 ;
- Interposer un isolant électrique entre les deux feuilles métalliques, par exemple par dépôt sur l'une des faces internes des feuilles métalliques ;
- Reporter la batterie (8) dans la cavité borgne (9) de l'une des feuilles métalliques (2,3) ;
- Rapporter des pistes conductrices (6) et les connecter entre les bornes de la batterie (8) et les plots d'alimentation du module (4) à l'aide d'un film conducteur anisotropique;
- Rapporter et coller la feuille métallique supérieure (2) sur la feuille métallique inférieure (3) ;
- Rapporter et coller le module électronique (4) dans la cavité (5) de la feuille métallique supérieure (2).

### AVANTAGES DE L'INVENTION

L'invention atteint les objectifs fixés. Des tests montrent que la communication radiofréquence avec un lecteur est de bonne qualité quelle que soit l'orientation de la carte, et conforme aux spécifications EMVCo.

Les faces métalliques sont pleines, sans compromettre la qualité de communication radiofréquence. Elles offrent un bel aspect, et une bonne prise en main.

La fabrication des feuilles métalliques et l'assemblage des composants est simple et à faible coût.

En définitive, la carte à puce selon l'invention fonctionne de la même manière qu'une carte en matière plastique mais grâce au mode de communication actif respecte pleinement la norme EMVCo sans contact.

## Revendications

1. - Carte à puce (1) à double interface de communication à contact et sans contact, comprenant un corps de carte comportant deux feuilles métalliques (2,3) et un module électronique (4) pourvu d'un bornier de contacts (11) et d'une antenne (12) destinée à une communication radiofréquence avec l'antenne d'un lecteur distant, **caractérisée en ce que** le module électronique (4) comporte un circuit de communication actif (16) alimenté par une batterie (8) située dans la carte à puce et configuré pour générer un signal de porteuse susceptible d'interagir avec le signal de porteuse émis par un lecteur sans contact distant de manière à établir une communication radiofréquence active entre la carte à puce (1) et ledit lecteur distant.

2. - Carte à puce (1) selon la revendication 1, **caractérisé en ce que** le circuit de communication actif (16) est configuré pour émettre un champ électromagnétique à la même fréquence porteuse que le lecteur et en phase avec la porteuse du lecteur pour coder un état de modulation haut, et pour émettre un champ électromagnétique à la même fréquence porteuse que le lecteur et en opposition de phase avec la porteuse du lecteur pour coder un état de modulation bas.

3. - Carte à puce selon l'une quelconque des revendications précédentes, **caractérisée en ce que** qu'au moins l'une des feuilles métalliques (2,3) est pourvue d'une cavité (9,9') apte à recevoir ladite batterie (8).

4. - Carte à puce selon la revendication 3, **caractérisée en ce que** les feuilles métalliques (2,3) sont chacune pourvue d'une cavité borgne (9,9'), les deux cavités borgnes étant situées en regard l'une de l'autre et aptes à recevoir ladite batterie (8).

5. - Carte à puce selon l'une des revendications précédentes, **caractérisée en ce que** les deux feuilles métalliques (2,3) comportent deux cavités traversantes (5,7), situées en regard l'une de l'autre et aptes à recevoir le module microélectronique (4).

6. - Carte à puce selon l'une quelconque des revendications précédentes, **caractérisée en ce que** la surface des deux feuilles métalliques (2,3) est supérieure ou égale à 90 % de la surface externe totale de la carte à puce.

7. - Carte à puce selon l'une quelconque des revendications précédentes, **caractérisée en ce que** les bornes de la batterie (8) sont reliées à des plots d'alimentation (14) situés sur le module électronique (4), par l'intermédiaire de pistes conductrices(6) aménagées sur la face interne de l'une des deux feuilles métalliques (2,3).

8. - Carte à puce selon l'une quelconque des revendications précédentes, **caractérisée en ce que** les feuilles métalliques (2,3) ont une épaisseur d'environ 400 micromètres.

9. - Carte à puce selon l'une quelconque des revendications précédentes, **caractérisée en ce que** les deux feuilles métalliques (2,3) sont en acier inoxydable ou en alliage.

10. - Carte à puce selon l'une quelconque des revendications précédentes, **caractérisée en ce qu'**elle comporte une couche de résine électriquement isolante ou de vernis isolant, disposée entre les deux feuilles métalliques (2,3).

11. - Carte à puce selon l'une quelconque des revendications précédentes, **caractérisée en ce que** le circuit de communication actif (16) est pourvu de diodes (17) permettant de recharger la batterie (8) via les contacts (11) du module lorsque la carte à puce est insérée dans un lecteur de cartes à puce à contact.

12. - Procédé de fabrication d'une carte à puce selon l'une quelconque des revendications précédentes, **caractérisé en ce qu'**il comporte des étapes consistant à :
- Découper deux feuilles métalliques (2,3) au format carte à puce ISO 7816-1;
- Usiner dans les feuilles métalliques des lumières traversantes (5,7) à l'endroit d'implantation prévu pour le module électronique (4) ;
- Usiner des cavités borgnes (9, 9') à l'endroit de chaque feuille métallique (2,3) prévu pour recevoir une batterie électrique (8) ;
- Interposer un isolant électrique entre les deux feuilles métalliques, par dépôt sur l'une des faces internes des feuilles métalliques ;
- Reporter la batterie (8) dans la cavité borgne (9) de l'une des feuilles métalliques (2,3) ;
- Rapporter des pistes conductrices (6) et les connecter entre les bornes de la batterie (8) et les plots d'alimentation du module (4) à l'aide d'un film conducteur anisotropique;
- Rapporter et coller la feuille métallique supérieure (2) sur la feuille métallique inférieure (3) ;
- Rapporter et coller le module électronique (4) dans la cavité (5) de la feuille métallique supérieure (2).

## Patentansprüche

1. Chipkarte (1) mit doppelter kontaktbehafteter und kontaktloser Kommunikationsschnittstelle, umfassend einen Kartenkörper, der zwei Metallfolien (2, 3) aufweist, und ein elektronisches Modul (4), das mit einer Kontaktklemmleiste (11) versehen ist und mit einer Antenne (12), die zu einer Funkfrequenzkommunikation mit der Antenne eines entfernten Lesegeräts bestimmt ist, **dadurch gekennzeichnet, dass** das elektronische Modul (4) einen aktiven Kommunikationsschaltkreis (16) aufweist, der von einer in der Chipkarte gelegenen Batterie (8) versorgt wird und dazu ausgestaltet ist, ein Trägersignal zu erzeugen, das geeignet ist, mit dem von einem entfernten kontaktlosen Lesegerät ausgesendeten Trägersignal zu interagieren, so dass eine aktive Funkfrequenzkommunikation zwischen der Chipkarte (1) und dem entfernten Lesegerät hergestellt wird.

2. Chipkarte (1) nach Anspruch 1, **dadurch gekennzeichnet, dass** der aktive Kommunikationsschaltkreis (16) dazu ausgestaltet ist, ein elektromagnetisches Feld mit der gleichen Trägerfrequenz wie das Lesegerät und gleichphasig zum Träger des Lesegeräts auszusenden, um einen oberen Modulationsstatus zu kodieren, und ein elektromagnetisches Feld mit der gleichen Trägerfrequenz wie das Lesegerät und gegenphasig zum Träger des Lesegeräts auszusenden, um einen unteren Modulationsstatus zu kodieren.

3. Chipkarte nach einem der vorhergehenden Ansprüche, **dadurch gekennzeichnet, dass** mindestens eine der Metallfolien (2, 3) mit einem Hohlraum (9, 9') versehen ist, der zum Aufnehmen der Batterie (8) geeignet ist.

4. Chipkarte nach Anspruch 3, **dadurch gekennzeichnet, dass** jede der Metallfolien (2, 3) mit einem Blindhohlraum (9, 9') versehen ist, wobei die beiden Blindhohlräume einander gegenüber gelegen sind und zum Aufnehmen der Batterie (8) geeignet sind.

5. Chipkarte nach einem der vorhergehenden Ansprüche, **dadurch gekennzeichnet, dass** die beiden Metallfolien (2, 3) zwei durchgehende Hohlräume (5, 7) aufweisen, die einander gegenüber gelegen sind und zum Aufnehmen des mikroelektronischen Moduls (4) geeignet sind.

6. Chipkarte nach einem der vorhergehenden Ansprüche, **dadurch gekennzeichnet, dass** die Fläche der beiden Metallfolien (2, 3) 90 % oder mehr der Gesamtaußenfläche der Chipkarte beträgt.

7. Chipkarte nach einem der vorhergehenden Ansprüche, **dadurch gekennzeichnet, dass** die Klemmen der Batterie (8) mit Versorgungspads (14), die auf dem elektronischen Modul (4) gelegen sind, über Leiterbahnen (6) verbunden sind, die auf der Innenseite einer der beiden Metallfolien (2, 3) ausgebildet sind.

8. Chipkarte nach einem der vorhergehenden Ansprüche, **dadurch gekennzeichnet, dass** die Metallfolien (2, 3) eine Dicke von ungefähr 400 Mikrometern haben.

9. Chipkarte nach einem der vorhergehenden Ansprüche, **dadurch gekennzeichnet, dass** die beiden Metallfolien (2, 3) aus Edelstahl oder aus einer Legierung sind.

10. Chipkarte nach einem der vorhergehenden Ansprüche, **dadurch gekennzeichnet, dass** sie eine Schicht aus elektrisch isolierendem Harz oder isolierendem Lack aufweist, die zwischen den beiden Metallfolien (2, 3) angeordnet ist.

11. Chipkarte nach einem der vorhergehenden Ansprüche, **dadurch gekennzeichnet, dass** der aktive Kommunikationsschaltkreis (16) mit Dioden (17) versehen ist, die es ermöglichen, die Batterie (8) über die Kontakte (11) des Moduls aufzuladen, wenn die Chipkarte in ein Lesegerät für kontaktbehaftete Chipkarten eingeführt ist.

12. Verfahren zur Herstellung einer Chipkarte nach einem der vorhergehenden Ansprüche, **dadurch gekennzeichnet, dass** es Schritte umfasst, die in Folgendem bestehen:
- Zuschneiden von zwei Metallfolien (2, 3) im Chipkartenformat ISO 7816-1;
- Bearbeiten der durchgehenden Öffnungen (5, 7) in den Metallfolien an der für das elektronische Modul (4) vorgesehenen Anordnungsstelle;
- Bearbeiten der Blindhohlräume (9, 9') an der Stelle jeder Metallfolie (2, 3), die zum Aufnehmen einer elektrischen Batterie (8) vorgesehen ist;
- Dazwischensetzen eines elektrischen Isolators zwischen die beiden Metallfolien durch Auftragen auf eine der Innenseiten der Metallfolien;
- Übertragen der Batterie (8) in den Blindhohlraum (9) einer der Metallfolien (2, 3);
- Ansetzen von Leiterbahnen (6) und Anschließen von diesen zwischen den Klemmen der Batterie (8) und den Versorgungspads des Moduls (4) mithilfe eines anisotropen leitfähigen Films;
- Ansetzen und Kleben der oberen Metallfolie (2) auf die untere Metallfolie (3);
- Ansetzen und Kleben des elektronischen Moduls (4) in den Hohlraum (5) der oberen Metallfolie (2).

## Claims

1. Chip card (1) with a dual, contact and contactless, communication interface, comprising a card body comprising two metal sheets (2, 3) and an electronic module (4) provided with a contact terminal block (11) and with an antenna (12) intended for radiofrequency communication with the antenna of a remote reader, **characterized in that** the electronic module (4) comprises an active communication circuit (16) supplied with power by a battery (8) located in the chip card and configured to generate a carrier signal capable of interacting with the carrier signal emitted by a remote contactless reader so as to establish active radiofrequency communication between the chip card (1) and said remote reader.

2. Chip card (1) according to Claim 1, **characterized in that** the active communication circuit (16) is configured to emit an electromagnetic field at the same carrier frequency as the reader and in phase with the carrier of the reader in order to encode a high modulation state, and to emit an electromagnetic field at the same carrier frequency as the reader and in phase opposition with the carrier of the reader in order to encode a low modulation state.

3. Chip card according to either one of the preceding claims, **characterized in that** at least one of the metal sheets (2, 3) is provided with a cavity (9, 9') able to accommodate said battery (8).

4. Chip card according to Claim 3, **characterized in that** the metal sheets (2, 3) are each provided with a blind cavity (9, 9'), the two blind cavities being located facing one another and able to accommodate said battery (8).

5. Chip card according to one of the preceding claims, **characterized in that** the two metal sheets (2, 3) comprise two through-cavities (5, 7), located facing one another and able to accommodate the microelectronic module (4).

6. Chip card according to any one of the preceding claims, **characterized in that** the area of the two metal sheets (2, 3) is greater than or equal to 90% of the total outer area of the chip card.

7. Chip card according to any one of the preceding claims, **characterized in that** the terminals of the battery (8) are connected to power supply pads (14) located on the electronic module (4), via conductive tracks (6) arranged on the inner face of one of the two metal sheets (2, 3).

8. Chip card according to any one of the preceding claims, **characterized in that** the metal sheets (2, 3) have a thickness of about 400 micrometres.

9. Chip card according to any one of the preceding claims, **characterized in that** the two metal sheets (2, 3) are made of stainless steel or of an alloy.

10. Chip card according to any one of the preceding claims, **characterized in that** it comprises a layer of electrically insulating resin or insulating lacquer, arranged between the two metal sheets (2, 3).

11. Chip card according to any one of the preceding claims, **characterized in that** the active communication circuit (16) is provided with diodes (17) allowing the battery (8) to be recharged via the contacts (11) of the module when the chip card is inserted into a contact chip card reader.

12. Process for producing a chip card according to any one of the preceding claims, **characterized in that** it comprises steps consisting in:
- Cutting out two metal sheets (2, 3) in ISO 7816-1 chip card format;
- Machining, into the metal sheets, through-openings (5, 7) at the installation location intended for the electronic module (4);
- Machining blind cavities (9, 9') at the location on each metal sheet (2, 3) intended for accommodating an electric battery (8);
- Interposing an electrical insulator between the two metal sheets, by deposition on one of the inner faces of the metal sheets;
- Placing the battery (8) in the blind cavity (9) of one of the metal sheets (2, 3);
- Adding conductive tracks (6) and connecting them between the terminals of the battery (8) and the power supply pads of the module (4) using an anisotropic conductive film;
- Adding and bonding the upper metal sheet (2) to the lower metal sheet (3);
- Adding and bonding the electronic module (4) into the cavity (5) of the upper metal sheet (2).
